# EUROPEAN PATENT SPECIFICATION

(11) **EP 3 987 180 B1**
(45) Date of publication and mention of the grant of the patent: **19.04.2023**
(21) Application number: 20826057.0
(22) Date of filing: 10.03.2020
(51) Int. Cl.: F03G 7/00, B01D 61/00

(54) **A SYSTEM WHICH GENERATES ELECTRICITY BY USING HUMIDITY IN AIR**
SYSTEM ZUR ERZEUGUNG VON ELEKTRIZITÄT UNTER VERWENDUNG VON FEUCHTIGKEIT IN LUFT
SYSTÈME DE PRODUCTION D'ÉLECTRICITÉ À L'AIDE DE L'HUMIDITÉ CONTENUE DANS L'AIR

(30) Priority: 20.06.2019 TR 201909195
(43) Date of publication of application: 27.04.2022
(73) Proprietor: REPG ENERJI SISTEMLERI SAN. VE TIC. A.S., 34467 Sariyer/Istanbul (TR)
(72) Inventor: AYARTURK, Hasan, 16230 Nilufer/Bursa (TR)
(74) Representative: Kaya, Erdem
(86) International application number: PCT/TR2020/050193
(87) International publication number: WO 2020/256669

(56) References cited:
- WO-A1-2013/034446
- WO-A2-00/47303
- WO-A2-00/47303
- JP-A- 2016 205 242
- US-A- 4 177 146
- US-A- 4 283 913
- US-A- 5 784 886

## Description

### TECHNICAL FIELD

The present invention relates to electricity generation systems comprising a first chamber for keeping a high solute liquid; a second chamber for keeping a low solute liquid; a membrane unit having a selective permeable which permits solvent passage from the low solute liquid received from the second chamber to the high solute liquid received from the first chamber thanks to the selective permeable membrane and which provides increase of the flow rate of the high solute liquid and a first outlet through which the high solute liquid with increased flow rate exits; an electricity generator connected to said first outlet for generating electricity by means of the movement of the high solute liquid with increased flow rate and with decreased concentration.

### PRIOR ART

In the related art, electrical energy can be generated by means of various methods. Electrical generators can transform the movement, received from a main movement source of the turbine, into electrical energy.

By means of osmosis principle, in other words, by providing movement of the main movement source by using flow rate which results from the solvent transfer to the liquids having different solute densities from each other, energy is generated. In more details, when a liquid having high solute and a liquid having low solute are passed through two chambers separated by means of a selective permeable membrane, solvent flow occurs from the liquid having low solute towards the liquid having high solute, and thus, the flow rate of the liquid having high solute increases, and this increasing flow rate is transformed into electrical energy by the generator moved by means of the turbine. The basic deficiency of this system is the dilution of the liquid having high solute and the stopping of the system because the two liquids have equal solute density after a determined duration passes when solvent passage occurs from the liquid having low solute to the liquid having high solute. In order to prevent this, liquid, which has high solute, must be continuously added. Therefore, such systems are placed between waste water/sea water which functions as liquid having high solute and clean water sources which function as liquid having low solute. Such systems continuously need addition of low solute liquid.

In the Japan application with number JP2015001209, a system which generates electricity in a similar manner to the abovementioned system is disclosed.

In the USA application with number US2014138956, a system which uses sea water is disclosed.

As a result, because of all of the abovementioned problems, an improvement is required in the related technical field.

The applications US 4 283 913 A and WO 2013 / 034446 A1 disclose each a closed-loop electricity generation system, that is able to recycle the liquid. However, improvements can be made in such systems.

### BRIEF DESCRIPTION OF THE INVENTION

The present invention relates to an electricity generation system, for eliminating the above mentioned disadvantages and for bringing new advantages to the related technical field.

An object of the present invention is to provide an electricity generation system which operates without needing support of low solute liquid and high solute liquid from outside, and which improves the existing closed-loop systems.

Another object of the present invention is to provide an electricity generation system with less position dependency.

In order to realize the abovementioned objects and the objects which are to be deducted from the detailed description below, the present invention is an electricity generation system comprising a first chamber for keeping a high solute liquid; a second chamber for keeping a low solute liquid; a membrane unit having a selective permeable which permits solvent passage from the low solute liquid received from the second chamber to the high solute liquid received from the first chamber thanks to the selective permeable membrane and which provides increase of the flow rate of the high solute liquid and a first outlet through which the high solute liquid with increased flow rate exits; an electricity generator connected to said first outlet for generating electricity by means of the movement of the high solute liquid with increased flow rate and with decreased concentration. Accordingly, the subject matter electricity generation system comprises a first collection chamber having at least one opening opened to the outer medium and associated with the first chamber for providing support of high solute liquid to the first chamber; a second collection chamber having at least one opening opened to the outer medium and associated with the second chamber for providing support of low solute liquid to the second chamber; a distribution valve which takes the high solute liquid which passes through the electricity generator and configured to optionally operate at a first position where said high solute liquid is guided to a first feedback outlet provided at the first chamber and at a second position where said high solute liquid is guided to a second feedback outlet provided at the second chamber, and a control unit which controls said distribution valve;
said control unit is configured to provide operation of said distribution valve at the first position at a first time interval where the relative humidity is low for providing obtaining high solute liquid in the first collection chamber by means of at least partial evaporation of the liquid which passes from the first feedback outlet to the first collection chamber, and to provide operation of said distribution valve at the second position at a second time interval where the relative humidity is high for providing obtaining low solute liquid in the second collection chamber by means of collecting the humidity in the air by the liquid which passes from the second feedback outlet to the second collection chamber. Thus, at the times where the relative humidity is high, low solute liquid is collected at the second collection chamber and at the times where the relative humidity is high, high solute liquid is collected at the first collection chamber and the need of the system for the support of liquid from outside is eliminated.

In a preferred embodiment of the present invention, said first feedback outlet is configured to define a first gap between the first feedback outlet and the first collection chamber where the liquid, exiting the first feedback outlet, falls.

In another preferred embodiment of the present invention, a first spray nozzle is provided which provides the liquid to be sprayed in a pulverized manner and associated with the first feedback outlet. Thus, evaporation is accelerated.

In another preferred embodiment of the present invention, an evaporative cooling pad is provided at said first gap. Thus, evaporation is accelerated.

In another preferred embodiment of the present invention, said second feedback outlet is configured to define a second gap between the second feedback outlet and the second collection chamber where the liquid, exiting the second feedback outlet, falls. Thus, condensation is accelerated.

In another preferred embodiment of the present invention, a second spray nozzle is provided which provides the liquid to be sprayed in a pulverized manner and associated with the second feedback outlet. Thus, condensation is accelerated.

In another preferred embodiment of the present invention, an evaporative cooling pad is provided at said second gap. Thus, condensation is accelerated.

In another preferred embodiment of the present invention, at least one fan is provided which is configured to blow air towards the first gap and/or the second gap. Thus, evaporation is further accelerated.

In another preferred embodiment of the present invention, at least one fan is provided which is configured to blow air towards the first gap and/or towards the second gap. Thus, condensation is further accelerated.

In another preferred embodiment of the present invention, the control unit comprises a humidity sensor and the control unit is configured to provide operation of the distribution valve at the first position where the measured humidity level is under a predetermined first threshold value and to provide operation of the distribution valve at the second position where the measured humidity level exceeds a predetermined second threshold value.

### BRIEF DESCRIPTION OF THE FIGURES

Figure 1 is a representative view of the system.
Figure 2 is a representative view of a possible embodiment of the invention.
Figure 3 is a representative view of a possible embodiment of the invention.

### DETAILED DESCRIPTION OF THE INVENTION

In this detailed description, the subject matter is explained with references to examples without forming any restrictive effect only in order to make the subject more understandable.

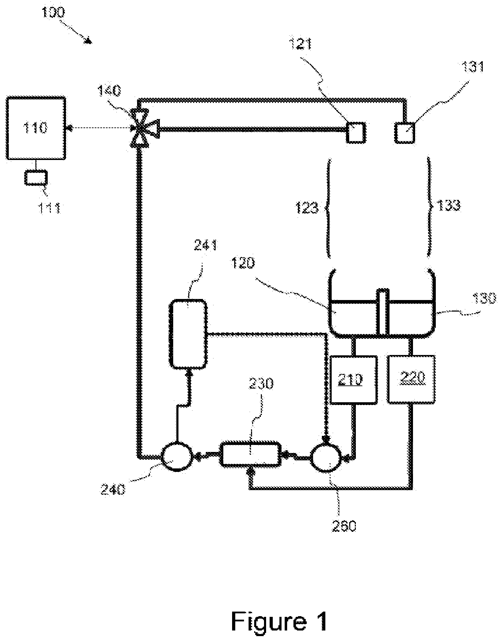

With reference to Figure 1, the subject matter invention comprises a first chamber (210) comprising a high solute liquid (102), a second chamber (220) comprising a low solute liquid (102) and a membrane unit (230) which receives the high solute liquid (101) from said first chamber (210) and the low solute liquid (102) from the second chamber (220). The membrane unit (230) comprises a selective permeable membrane. The selective permeable membrane permits solvent passage by means of osmosis principle from the low solute liquid (102) to the high solute liquid (101). Thus, the solvent amount in the high solute liquid (101) increases and the flow rate thereof increases, however the concentration thereof decreases. By means of the movement of the high solute liquid (101) of which the flow rate increases and of which the concentration is decreased, electricity is generated by the electricity generator (240).

The high solute liquid (101) mentioned here is more concentrated when compared with the low solute liquid (102). The high solute liquid (101) can be water comprising 40% salt, and the low solute liquid (102) can be water comprising 10% salt.

The electricity generator (240) mentioned here can comprise a turbine which transforms the mechanical movement, existing in the flow of the liquid, into rotational movement and an alternator which transforms the rotational movement of the turbine into electricity. Thus, electricity is generated (240) with the help of osmosis.

In this form of the system, since the concentration of the high solute liquid (101) decreases since the solvent is taken, the low solute liquid (102) and the high solute liquid (101) support is continuously needed. The novel side of the system, which will be described below, solves this problem.

The electricity generation system comprises a first collection chamber (120) having an opening which is opened to the outer medium. The first collection chamber (120) accumulates high solute liquid (101) therein in time as it will be described below. It is associated with the first chamber (210) for supporting the accumulated first solute liquid (101) to the first chamber (210). Preferably this connection is controlled by a valve (not illustrated in the figure).

The electricity generation system (100) moreover comprises a second collection chamber (130) having an opening opened to the outer medium. The second collection chamber (130) accumulates therein low solute liquid (102) in time as described below. It is associated with the second chamber (220) for supporting the accumulated low solute liquid (102) to the second chamber (220). This connection is preferably controlled by a valve (not illustrated in the figures).

The electricity generation system (100) comprises a distribution valve (140) which operates at a first position where the high solute liquid (101), passing through the electricity generator (240) and with increased flow rate and with decreased concentration, is transferred to the first chamber (210) by a first feedback outlet (121), and at a second position where said high solute liquid (101) is transferred to the second chamber (220) by a second feedback outlet (131).

A control unit (110) is configured to determine the operation position of the distribution valve (140). The control unit (110) can be a general-purpose or a special-purpose computer comprising a processor. The control unit (110) is configured to provide operation of said distribution valve (140) at the first position at a first time interval where the relative humidity is low for providing obtaining of the high solute liquid (101) in the first collection chamber (120) by means of at least partially evaporating of the liquid which passes from the first feedback outlet (121) to the first collection chamber (120). The control unit (110) is moreover configured to provide operation of said distribution valve (140) at the second position at a second time interval where the relative humidity is high for providing obtaining of the low solute liquid (102) by means of collecting the humidity, existing in the air, by the liquid which comes from the second feedback outlet (131) to the second collection chamber (130).

The first time interval and the second time interval mentioned here are determined according to the humidity levels which change within the day.

A first gap (123) is provided between the first feedback outlet (121) and the first collection chamber (120), where the liquid flowing from the outlet falls into said first gap (123) by travelling in the air. A second gap (133) is provided between the second feedback outlet (131) and the second collection chamber (130) for providing evaporation of the liquid while the liquid is falling.

In a possible embodiment of the present invention, the control unit (110) also comprises a humidity sensor (111). The control unit (110) is configured to detect the relative humidity in the air according to the measurements taken from the humidity sensor (111) and to provide operation of the distribution valve at the first position in case the detected relative humidity exceeds a predetermined first threshold value and to provide operation of the distribution valve at the second position in case the detected relative humidity exceeds a predetermined second threshold value. The threshold values mentioned here can be determined according to the concentrations of the high solute liquid and low solute liquid (102). For example, the first threshold value can be selected as 90% and the second threshold value can be selected as 10%.

In case the relative humidity is high, the high solute liquid (101) with decreased concentration and transferred to the second collection chamber (130) provides the humidity in the air to be transformed into water and provides passage of solvent from the humidity in the air. Thus, the low solute liquid (102) is obtained. The low solute liquid (102) collected in the second collection chamber (130) can be transferred to the second chamber as required. In a possible embodiment, the second chamber (220) and the second collection chamber (130) are the same. In case the relative humidity is low, the solute in the high solute liquid (101) with lowered concentration and transferred to the first collection chamber (120) is evaporated and mixed to the air and the concentration thereof increases.

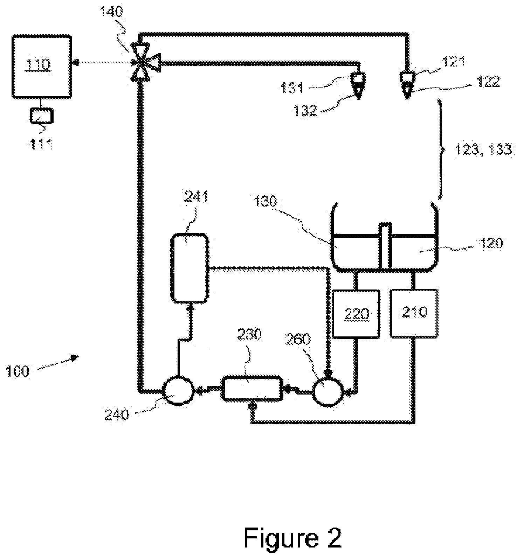

In a possible embodiment of the present invention as in Figure 2, a first spray nozzle (122) is provided at the first feedback outlet (121). The first spray nozzle (122) provides the liquid to fall to the first collection chamber (120) in a pulverized form and since contact with the air in low relative humidity conditions is increased, the evaporation of the liquid is facilitated. A second spray nozzle (132) is provided at the second feedback outlet (131). The second spray nozzle (132) provides the liquid to fall into the second collection chamber (130) in a pulverized manner, and since the contact with the air increases, the condensation of the humidity in the air under low relative humidity conditions is facilitated.

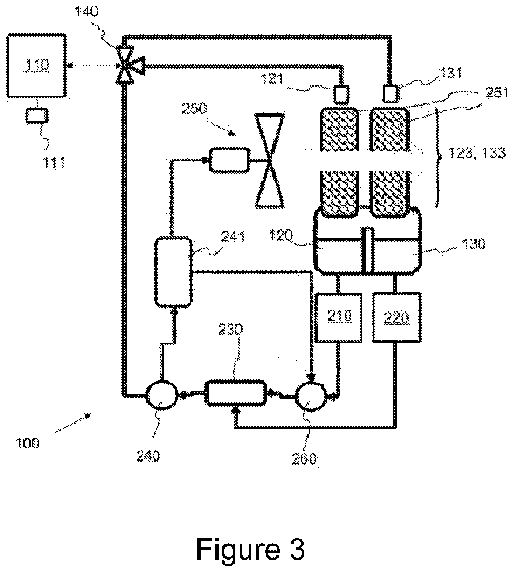

In a possible embodiment of the present invention as in Figure 3, one each evaporator cooling pads are provided at the first gap (123) and at the second gap (133). Moreover, at least one fan (250) is positioned in a manner facing the first gap (123) and/or the second gap (133). Thus, evaporation of the liquid at low relative humidity conditions is facilitated and air circulation is provided at high humidity conditions, and the humidity existing in the air is condensed. In this possible embodiment, the fan (250) is connected to an electricity distribution unit (241) associated with the electricity generator (240). Thus, a part of the generated electricity can be used in energizing the fan (250).

In a possible embodiment of the present invention, a pump (260) can be used for bringing the water, existing in the first chamber (210), to a specific flow rate at the beginning.

The protection scope of the present invention is set forth in the annexed Claims and cannot be restricted to the illustrative disclosures given above, under the detailed description. It is because a person skilled in the relevant art can obviously produce similar embodiments under the light of the foregoing disclosures, without departing from the main principles of the present invention.

### REFERENCE NUMBERS

100 Electricity generation system
101 High solute liquid
102 Low solute liquid
110 Control unit
111 Humidity sensor
120 First collection chamber
121 First feedback outlet
122 First spray nozzle
123 First gap
130 Second collection chamber
131 Second feedback outlet
132 Second spray nozzle
133 Second gap
140 Distribution valve
210 First chamber
220 Second chamber
230 Membrane unit
240 Electricity generator
241 Electricity distributor
250 Fan
251 Evaporative cooling pad
260 Pump

## Claims

1. An electricity generation system (100) comprising a first chamber (210) for keeping a high solute liquid (101); a second chamber (220) for keeping a low solute liquid (102); a membrane unit (230) having a selective permeable which permits solvent passage from the low solute liquid (102) received from the second chamber (220) to the high solute liquid (101) received from the first chamber (210) thanks to the selective permeable membrane and which provides increase of the flow rate of the high solute liquid (101) and a first outlet through which the high solute liquid (101) with increased flow rate exits; an electricity generator (240) connected to said first outlet for generating electricity (240) by means of the movement of the high solute liquid (101) with increased flow rate and with decreased concentration, **wherein** the electricity generation system (100) comprises a first collection chamber (120) having at least one opening opened to the outer medium and associated with the first chamber (210) for providing support of high solute liquid (101) to the first chamber (210); **characterised in that** the electricity generation system (100) further comprises a second collection chamber (130) having at least one opening opened to the outer medium and associated with the second chamber (220) for providing support of low solute liquid (102) to the second chamber (220); a distribution valve (140) which takes the high solute liquid (101) which passes through the electricity generator (240) and configured to optionally operate at a first position where said high solute liquid (101) is guided to a first feedback outlet (121) provided at the first chamber (210) and at a second position where said high solute liquid (101) is guided to a second feedback outlet (131) provided at the second chamber (220), and a control unit (110) which controls said distribution valve (140);
said control unit (110) is configured to provide operation of said distribution valve (140) at the first position at a first time interval where the relative humidity is low for providing obtaining high solute liquid (101) in the first collection chamber (120) by means of at least partial evaporation of the liquid which passes from the first feedback outlet (121) to the first collection chamber (120), and to provide operation of said distribution valve (140) at the second position at a second time interval where the relative humidity is high for providing obtaining low solute liquid (102) in the second collection chamber (130) by means of collecting the humidity in the air by the liquid which passes from the second feedback outlet (131) to the second collection chamber (130).

2. The electricity generation system (100) according to claim 1, **wherein** said first feedback outlet (121) is configured to define a first gap (123) between the first feedback outlet (121) and the first collection chamber (120) where the liquid, exiting the first feedback outlet (121), falls.

3. The electricity generation system (100) according to claim 2, **wherein** a first spray nozzle (122) is provided which provides the liquid to be sprayed in a pulverized manner and associated with the first feedback outlet (121).

4. The electricity generation system (100) according to claim 2, **wherein** an evaporative cooling pad (251) is provided at said first gap (123).

5. The electricity generation system (100) according to claim 1, **wherein** said second feedback outlet (131) is configured to define a second gap (133) between the second feedback outlet (131) and the second collection chamber (130) where the liquid, exiting the second feedback outlet (131), falls.

6. The electricity generation system (100) according to claim 5, **wherein** a second spray nozzle (132) is provided which provides the liquid to be sprayed in a pulverized manner and associated with the second feedback outlet (131).

7. The electricity generation system (100) according to claim 5, **wherein** an evaporative cooling pad (251) is provided at said second gap (133).

8. The electricity generation system (100) according to claim 2, **wherein** at least one fan (250) is provided which is configured to blow air towards the first gap (123) and/or the second gap (133).

9. The electricity generation system (100) according to claim 5, **wherein** at least one fan (250) is provided which is configured to blow air towards the first gap (123) and/or towards the second gap (133).

10. The electricity generation system (100) according to claim 1, **wherein** the control unit (110) comprises a humidity sensor (111) and the control unit (110) is configured to provide operation of the distribution valve (140) at the first position where the measured humidity level is under a predetermined first threshold value and to provide operation of the distribution valve (140) at the second position where the measured humidity level exceeds a predetermined second threshold value.

## Patentansprüche

1. System zur Elektrizitätserzeugung (100), umfassend umfassend eine erste Kammer (210) zum Aufbewahren einer hoch gelösten Flüssigkeit (101); umfassend eine zweite Kammer (220) zum Aufbewahren einer niedrig gelösten Flüssigkeit (102); eine Membraneinheit (230) mit einer selektiv permeablen Membran, die den Durchgang des Lösungsmittels von der aus der zweiten Kammer (220) erhaltenen niedrig gelösten Flüssigkeit (102) zu der aus der ersten Kammer (210) erhaltenen hoch gelösten Flüssigkeit (101) dank der selektiv permeablen Membran ermöglicht und die für eine Erhöhung der Durchflussrate der hoch gelösten Flüssigkeit (101) sorgt, und einen ersten Auslass, durch den die hoch gelöste Flüssigkeit (101) mit erhöhter Durchflussrate austritt; einen Elektrizitätsgenerator (240), der mit dem genannten ersten Auslass verbunden ist, um durch die Bewegung der hoch gelösten Flüssigkeit (101) mit erhöhter Durchflussrate und mit verringerter Konzentration Elektrizität (240) zu erzeugen; **wobei** das System zur Elektrizitätserzeugung (100) eine erste Sammelkammer (120) umfasst, die mindestens eine Öffnung aufweist, die sich zum äußeren Medium hin geöffnet und mit der ersten Kammer (210) verbunden ist, um die erste Kammer (210) mit einer hoch gelösten Flüssigkeit (101) zu versorgen; **dadurch gekennzeichnet, dass** das System zur Elektrizitätserzeugung (100) ferner eine zweite Sammelkammer (130) umfasst, die mindestens eine Öffnung aufweist, die zu dem äußeren Medium hin geöffnet ist und mit der zweiten Kammer (220) verbunden ist, um die zweite Kammer (220) mit einer niedrig gelösten Flüssigkeit (102) zu versorgen; ein Verteilerventil (140), das die hoch gelöste Flüssigkeit (101) aufnimmt, die durch den Elektrizitätsgenerator (240) hindurchgeht, und das derart konfiguriert ist, dass es optional in einer ersten Position arbeitet, in der die genannte hoch gelöste Flüssigkeit (101) zu einem ersten Rückkopplungsauslass (121) geleitet wird, der an der ersten Kammer (210) vorgesehen ist, und in einer zweiten Position, in der die genannte hoch gelöste Flüssigkeit (101) zu einem zweiten Rückkopplungsauslass (131) geleitet wird, der an der zweiten Kammer (220) vorgesehen ist, und eine Steuereinheit (110), die das genannte Verteilerventil (140) steuert;
die genannte Steuereinheit (110) derart konfiguriert ist, dass sie das genannte Verteilerventil (140) in einem ersten Zeitintervall, in dem die relative Luftfeuchtigkeit niedrig ist, in der ersten Position betätigt, um in der ersten Sammelkammer (120) durch zumindest teilweise Verdampfung der Flüssigkeit, die vom ersten Rückkopplungsauslass (121) in die erste Sammelkammer (120) gelangt, eine hoch gelöste Flüssigkeit (101) zu erzeugen und die Betätigung des genannten Verteilerventils (140) in der zweiten Position in einem zweiten Zeitintervall, in dem die relative Luftfeuchtigkeit hoch ist, um in der zweiten Sammelkammer (130) eine niedrig gelöste Flüssigkeit (102) zu erhalten, indem die Feuchtigkeit in der Luft durch die Flüssigkeit gesammelt wird, die vom zweiten Rückkopplungsauslass (131) zur zweiten Sammelkammer (130) fließt.

2. System zur Elektrizitätserzeugung (100) nach Anspruch 1, **wobei** der genannte erste Rückkopplungsauslass (121) derart konfiguriert ist, dass er einen ersten Spalt (123) zwischen dem ersten Rückkopplungsauslass (121) und der ersten Sammelkammer (120) definiert, in den die Flüssigkeit, die aus dem ersten Rückkopplungsauslass (121) austritt, fällt.

3. System zur Elektrizitätserzeugung (100) nach Anspruch 2, **wobei** eine erste Sprühdüse (122) vorgesehen ist, die die zu versprühende Flüssigkeit in pulverisierter Form bereitstellt und mit dem ersten Rückkopplungsauslass (121) verbunden ist.

4. System zur Elektrizitätserzeugung (100) nach Anspruch 2, **wobei** ein Verdunstungskühlkissen (251) an dem genannten ersten Spalt (123) vorgesehen ist.

5. System zur Elektrizitätserzeugung (100) nach Anspruch 1, **wobei** der genannte zweite Rückkopplungsauslass (131) derart konfiguriert ist, dass er einen zweiten Spalt (133) zwischen dem zweiten Rückkopplungsauslass (131) und der zweiten Sammelkammer (130) definiert, in den die Flüssigkeit, die aus dem zweiten Rückkopplungsauslass (131) austritt, fällt.

6. System zur Elektrizitätserzeugung (100) nach Anspruch 5, **wobei** eine zweite Sprühdüse (132) vorgesehen ist, die die zu versprühende Flüssigkeit in pulverisierter Form bereitstellt und dem zweiten Rückkopplungsauslass (131) zugeordnet ist.

7. System zur Elektrizitätserzeugung (100) nach Anspruch 5, **wobei** an dem genannten zweiten Spalt (133) ein Verdunstungskühlkissen (251) vorgesehen ist.

8. System zur Elektrizitätserzeugung (100) nach Anspruch 2, **wobei** mindestens ein Lüfter (250) vorgesehen ist, der derart konfiguriert ist, dass er Luft auf den ersten Spalt (123) und/oder den zweiten Spalt (133) bläst.

9. System zur Elektrizitätserzeugung (100) nach Anspruch 5, **wobei** mindestens ein Lüfter (250) vorgesehen ist, das derart ausgebildet ist, dass es Luft in Richtung des ersten Spalts (123) und/oder in Richtung des zweiten Spalts (133) bläst.

10. System zur Elektrizitätserzeugung (100) nach Anspruch 1, **wobei** die Steuereinheit (110) einen Feuchtigkeitssensor (111) umfasst und die Steuereinheit (110) derart konfiguriert ist, dass sie eine Betätigung des Verteilerventils (140) an der ersten Position vorsieht, an der der gemessene Feuchtigkeitspegel unter einem vorbestimmten ersten Schwellenwert liegt, und dass sie eine Betätigung des Verteilerventils (140) an der zweiten Position vorsieht, an der der gemessene Feuchtigkeitspegel einen vorbestimmten zweiten Schwellenwert überschreitet.

## Revendications

1. Système de génération d'électricité (100) comprenant une première chambre (210) pour contenir un liquide à soluté élevé (101) ; une deuxième chambre (220) pour contenir un liquide à soluté faible (102) ; une unité de membrane (230) ayant une membrane perméable sélective qui permet le passage de solvant du liquide à soluté faible (102) reçu de la deuxième chambre (220) au liquide à soluté élevé (101) reçu de la première chambre (210) grâce à la membrane perméable sélective et qui fournit une augmentation du débit du liquide à soluté élevé (101) et une première sortie à travers laquelle le liquide à soluté élevé (101) avec un débit augmenté sort ; un générateur d'électricité (240) connecté à ladite première sortie pour générer de l'électricité (240) au moyen du mouvement du liquide à soluté élevé (101) avec un débit augmenté et une concentration réduite, **dans lequel** le système de génération d'électricité (100) comprend une première chambre de collecte (120) ayant au moins une ouverture ouverte au milieu extérieur et associée à la première chambre (210) pour fournir un support du liquide à soluté élevé (101) à la première chambre (210) ; **caractérisé en ce que** le système de génération d'électricité (100) comprend en outre une deuxième chambre de collecte (130) ayant au moins une ouverture ouverte au milieu extérieur et associée à la deuxième chambre (220) pour fournir un support du liquide à soluté faible (102) à la deuxième chambre (220) ; une vanne de distribution (140) qui prend le liquide à soluté élevé (101) qui passe à travers le générateur d'électricité (240) et configurée pour fonctionner optionnellement dans une première position où ledit liquide à soluté élevé (101) est guidé à une première sortie de retour (121) fournie au niveau de la première chambre (210) et dans une deuxième position où ledit liquide à soluté élevé (101) est guidé à une deuxième sortie de retour (131) fournie au niveau de la deuxième chambre (220), et une unité de commande (110) qui commande ladite vanne de distribution (140) ;
ladite unité de commande (110) est configurée pour fournir le fonctionnement de ladite vanne de distribution (140) à la première position à un premier intervalle de temps où l'humidité relative est faible pour fournir l'obtention d'un liquide à soluté élevé (101) dans la première chambre de collecte (120) au moyen d'une évaporation au moins partielle du liquide qui passe de la première sortie de retour (121) à la première chambre de collecte (120), et pour fournir le fonctionnement de ladite vanne de distribution (140) à la deuxième position à un deuxième intervalle de temps où l'humidité relative est élevée pour fournir l'obtention du liquide à soluté faible (102) dans la deuxième chambre de collecte (130) au moyen de la collecte de l'humidité dans l'air par le liquide qui passe de la deuxième sortie de retour (131) à la deuxième chambre de collecte (130).

2. Système de génération d'électricité (100) selon la revendication 1, **dans lequel** ladite première sortie de retour (121) est configurée pour définir un premier espace (123) entre la première sortie de retour (121) et la première chambre de collecte (120) où le liquide, sortant de la première sortie de retour (121), tombe.

3. Système de génération d'électricité (100) selon la revendication 2, **dans lequel** une première buse de pulvérisation (122) est fournie qui fournit le liquide à pulvériser de manière pulvérisée et associée à la première sortie de retour (121).

4. Système de génération d'électricité (100) selon la revendication 2, **dans lequel** un tampon de refroidissement par évaporation (251) est fourni au niveau dudit premier espace (123).

5. Système de génération d'électricité (100) selon la revendication 1, **dans lequel** ladite deuxième sortie de retour (131) est configurée pour définir un deuxième espace (133) entre la deuxième sortie de retour (131) et la deuxième chambre de collecte (130) où le liquide, sortant de la deuxième sortie de retour (131), tombe.

6. Système de génération d'électricité (100) selon la revendication 5, **dans lequel** une deuxième buse de pulvérisation (132) est fournie qui fournit le liquide à pulvériser de manière pulvérisée et associée à la deuxième sortie de retour (131).

7. Système de génération d'électricité (100) selon la revendication 5, **dans lequel** un tampon de refroidissement par évaporation (251) est fourni au niveau dudit deuxième espace (133).

8. Système de génération d'électricité (100) selon la revendication 2, **dans lequel** au moins un ventilateur (250) est fourni qui est configuré pour souffler de l'air vers le premier espace (123) et/ou le deuxième espace (133).

9. Système de génération d'électricité (100) selon la revendication 5, **dans lequel** au moins un ventilateur (250) est fourni qui est configuré pour souffler de l'air vers le premier espace (123) et/ou vers le deuxième espace (133).

10. Système de génération d'électricité (100) selon la revendication 1, **dans lequel** l'unité de commande (110) comprend un capteur d'humidité (111) et l'unité de commande (110) est configurée pour fournir le fonctionnement de la vanne de distribution (140) dans la première position où le niveau d'humidité mesuré est inférieur à une première valeur seuil prédéterminée et pour fournir le fonctionnement de la vanne de distribution (140) dans la deuxième position où le niveau d'humidité mesuré dépasse une deuxième valeur seuil prédéterminée.
